# EUROPEAN PATENT APPLICATION

(11) **EP 3 544 309 A1**
(43) Date of publication of application: **25.09.2019**
(21) Application number: 17885323.0
(22) Date of filing: 21.12.2017
(51) Int. Cl.: H04Q 9/00, B31B 50/00, G05B 9/02

(54) **WIRELESS OPERATION SYSTEM AND BOX MAKING MACHINE USING SAME**

(30) Priority: 21.12.2016 JP 2016247997
(71) Applicant: Mitsubishi Heavy Industries Machinery Systems, Ltd., Hyogo-ku Kobe-shi Hyogo 652-8585 (JP)
(72) Inventor: HISAYUKI, Takao, Mihara-shi Hiroshima 729-0393 (JP); TANCHI, Masayoshi, Mihara-shi Hiroshima 729-0393 (JP)
(74) Representative: Hoffmann Eitle
(86) International application number: PCT/JP2017/045863
(87) International publication number: WO 2018/117206

(57) **Abstract**

A wireless operation system is configured by including a wireless operation terminal (150) comprising inputting means (70) that inputs an operation instruction to cause a machine to execute a predetermined operation and wireless transmitting means (80a) that wirelessly transmits the operation instruction input from the inputting means (70); position detecting means (72,78,90,91) that detects a position of the wireless operation terminal (150); and permitted operation setting means (73) that sets a permitted operation that the wireless operation terminal (150) is allowed to execute in accordance with the position of the wireless operation terminal (150) detected by the position detecting means (72, 78, 90, 91).

## Description

### [Technical Field]

The present invention relates to a wireless operation system that remotely operates a device by using a wireless operation terminal and a box making machine using the same.

### [Background Technique]

Various techniques have been developed each of which allows an operator distant from a controller to remotely operate an industrial machine via a wireless operation terminal. Achievement in remote operation enhances convenience because, for example, the operator can move to a point of the industrial machine, which particularly requires to be monitored, and operate the industrial machine or change the setting of the industrial machine while visually observing the point.

Examples of this technique are disclosed in Patent Literatures 1 and 2. Hereinafter, the techniques disclosed in Patent Literatures 1 and 2 will now be described, indicating the reference numbers used in Patent Literatures 1 and 2 in brackets for the sake of reference.

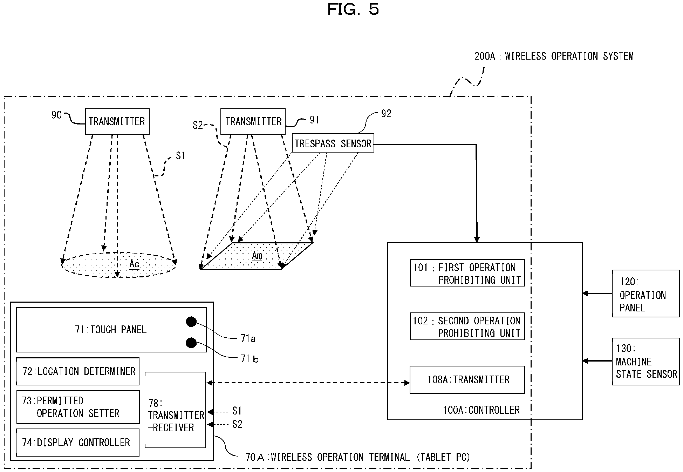

Patent Literature 1 discloses a technique related to an automated machine (1) that covers a cigarette box with a transparent wrapper wherein the setting of the automated machine (1) can be changed via a computer tablet (28) wirelessly connected to a control unit (8) (see paragraph [0036] and FIG. 5, for example).

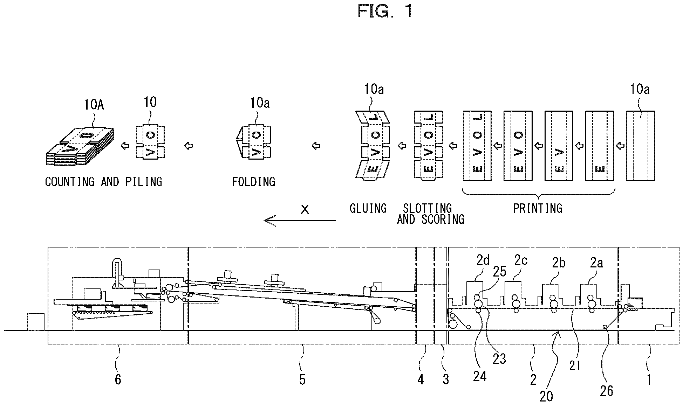

Patent Literature 2 discloses a technique wherein a portable touch screen (4), such as a smartphone or a tablet computer, is wirelessly connected to a control computer (7) of a control station (2), and a printer (1) can be remotely operated by using the portable touch screen (4) (see paragraph [0018] and FIG. 1, for example).

### [Prior Art Reference]

### [Patent Literature]

[Patent Literature 1] Japanese Laid-open Patent Publication No. 2013-234000
[Patent Literature 2] Japanese Utility Model 3195742

### [Summary of Invention]

### [Problems to be Solved by Invention]

Remotely operating an industrial machine via a wireless operation terminal can enhance the degree of freedom of a place of the operation, so that the convenience of the operation can be enhanced. On the other hand, capability of operating from various positions has a possibility of generating a blind site at an unexpected point, and the operation are concerned to be carelessly made while no attention is being paid to the blind site. Besides, it is concerned that, while an operator is moving, carrying a wireless operation terminal, an ambient person or article may touch the wireless operation terminal and erroneously operates the wireless operation terminal.

With the foregoing problems in view, an object of the present invention is to provide a wireless operation system that can inhibit improper operation and a box making machine using the same.

### [Means to Solve the Problem]

(1) To attain the above object, a wireless operation system of the present invention is characterized by including: a wireless operation terminal including inputting means that inputs an operation instruction to cause a machine to execute a predetermined operation and wireless transmitting means that wirelessly transmits the operation instruction input from the inputting means;
   position detecting means that detects a position of the wireless operation terminal; and permitted operation setting means that sets a permitted operation that the wireless operation terminal is allowed to execute in accordance with the position of the wireless operation terminal detected by the position detecting means.
(2) It is preferable that the position detecting means detects that the wireless operation terminal is positioned in a predetermined operation permitted area; and the permitted operation setting means sets, if the position detecting means detects that the wireless operation terminal is positioned in the predetermined operation permitted area, at least one of a plurality of the permitted operations.
(3) It is also preferable that the position detecting means includes: a transmitter that transmits an operation permitting signal to the operation permitted area serving as an outputting range; a receiver that is attached to the wireless operation terminal and is able to receive the operation permitting signal; and position determining means that determines, if the receiver receives the operation permitting signal, that the wireless operation terminal is positioned in the operation permitted area.
(4) It is additionally preferable that the position detecting means includes: a transmitter that is attached to the wireless operation terminal and that outputs an operation permitting signal; a receiver that is able to receive the operation permitting signal in the operation permitting area serving as a receiving range; and position determining means that determines, if the receiver receives the operation permitting signal, that the wireless operation terminal is positioned in the operation permitted area.
(5) It is further preferable that the position detecting means includes: a transmitter that is attached to one of an entrance of the operation permitted area or the wireless operation terminal and that outputs a passing signal; a receiver that is attached to a remaining one of the entrance of the operation permitted area and the wireless operation terminal and that is able to receive the passing signal; and position determining means that determines, on the basis of the receiving of wireless operation terminal, whether or not the wireless operation terminal is positioned in the operation permitted area.
(6) It is further preferable that the position detecting means includes: terminal position specifying means that specifies a position of the wireless operation terminal; and position determining means that determines whether or not the wireless operation terminal is positioned in the operation permitted area.
(7) It is further preferable that the wireless operation system further includes instruction outputting restricting means that allows the wireless operation terminal to output an instruction to execute the permitted operation and prohibits the wireless operation terminal from outputting an instruction to execute an operation except for the permitted operation.
(8) It is further preferable that the wireless operation terminal includes an image display unit that displays an operation that is able to cause the machine to execute; the inputting means is configured to be able to select an operation that the wireless operation terminal is caused to execute from an operation displayed on the image display unit; the instruction outputting restricting means is configured to be display controlling means that sets display on the image display unit; and the display controlling means displays an image representing the permitted operation on the image display unit and prohibits the image display unit from displaying an image representing an operation except for the permitted operation.
(9) It is further preferable that the wireless operation system further includes instruction accept restricting means provided on the machine side that accepts an instruction to execute the permitted operation and does not accept an instruction to execute an operation except for the permitted operation.
(10) It is further preferable that the machine is a manufacturing machine including a plurality of parts and is provided alongside with a sample checking area to check quality of a sample manufactured by the manufacturing machine; the operation permitted area includes at least the sample checking area; the position detecting means determines whether or not the wireless operation terminal is positioned in the sample checking area; and the permitted operation setting means sets, if the wireless operation terminal is determined to be positioned in the sample checking area, the permitted operation over the plurality of parts.
(11) It is further preferable that the machine includes a plurality of parts; the operation permitted area includes at least a plurality of maintenance areas provided one alongside to each of the plurality of parts; the position detecting means determines whether or not the wireless operation terminal is positioned in the plurality of maintenance areas; and the permitted operation setting means sets, if the wireless operation terminal is positioned in one of the plurality of the maintenance areas, an operation required for maintenance in the one maintenance area in which the wireless operation terminal is determined to be positioned to be the permitted operation.
(12) It is further preferable that the machine is provided with machine state detecting means that detects a machine state; and the wireless operation system further includes first operation prohibiting means that prohibits, if execution of the permitted operation under the machine state detected by the machine state detecting means is detected to have a possibility of causing a risk, the permitted operation from being executed.
(13) It is further preferable that the machine is further provided with operation means that is able to transmit the operation instruction to the machine separately from the wireless operation terminal; the wireless operation terminal further includes trespass detecting means that detect trespass on the maintenance area; second operation prohibiting means; and the second operation prohibiting means prohibits, if trespass is detected by the trespass detecting means, the operating means and the wireless operation terminal from executing an operation directed to a trespass detected part that is one of the plurality of parts and that is provided alongside with one of the maintenance area into which the trespass is detected, and does not prohibit, if trespass is detected by the trespass detecting means under a state where the wireless operation terminal is detected to be positioned in the maintenance area provided alongside to the trespass detected part, the wireless operation from executing the permitted operation.
(14) It is further preferable that the wireless operation terminal includes emergency stopping means that performs emergency stopping on the machine; and when the emergency stopping means is operated, the emergency stopping is performed irrespective of the position of the wireless operation terminal.
(15) It is further preferable that the emergency stopping means is configured by a physical inputting device.
(16) It is further preferable that the wireless operation terminal includes the inputting means and the wireless transmitting means separately from each other.
(17) It is further preferable that the wireless operation terminal includes the inputting means and the wireless transmitting means integrated with each other; and the inputting means is a touch panel serving also as an image display unit.
(18) To attain the above object, a box making machine of the present invention includes a wireless operation system defined in one of the above (1)-(17).

### [Effect of Invention]

According to the present invention, the position detecting means detects the position of the wireless operation terminal, and the permitted operation setting means sets a permitted operation that the wireless operation terminal is allowed to execute in accordance with the position of the wireless operation terminal, so that it is possible to limit a place where a particular operation can be executed. Consequently, operation at an unusual place, operation at a place not suitable for the operation, and erroneous operation due to contact with an ambient person or article while the wireless operation terminal is being carried can be suppressed. Further, it is possible to inhibit an operation not highly related to the current position of the wireless operation terminal from being executed.

Consequently, it is possible to inhibit the wireless operation terminal from being operated improperly.

### [Brief Description of Drawings]

FIG. 1 is a schematic side view illustrating a configuration of a box making machine according to the embodiments of the present invention;
FIG. 2 is a schematic block diagram illustrating a configuration of a wireless operation system according to a first embodiment of the present invention;
FIGs. 3A and 3B are schematic diagram illustrating a wireless operation system of the first embodiment of the present invention, FIG. 3A being a plan view of a sample checking area and FIG. 3B being a plan view of a maintenance area;
FIG. 4 is a schematic side view illustrating a configuration of the main part of a feeding part according to the embodiments of the present invention;
FIG. 5 is a schematic block diagram illustrating a configuration of a wireless operation system for a box making machine according to a second embodiment of the present invention;
FIG. 6 is a schematic block diagram illustrating a configuration of a wireless operation system for a box making machine according to a third embodiment of the present invention;
FIG. 7 is a schematic plan view illustrating a modification to position detecting means according to the embodiments; and
FIG. 8 is a schematic side view illustrating another modification to position detecting means according to the embodiments.

### [Embodiments to Carry out Invention]

Hereinafter, the embodiments of the present invention will now be described with reference to the accompanying drawings. The following embodiments are merely exemplary and there is no intention to exclude various modifications and application of techniques that are not explicitly described in the following embodiments. The configurations of the following embodiments can be variously changed and modified without departing from the scopes of the embodiments.

In the following description, the term "upstream" represents the upstream side along the transferring direction X of a corrugated board sheet unless otherwise specified; the term "downstream" represents the downstream side along the transferring direction X of a corrugated board sheet unless otherwise specified; and the width direction of a corrugated board sheet which direction is orthogonal to the transferring direction X of a corrugated board sheet is hereinafter referred to the "sheet width direction W".

### [Configuration of a Box Making Machine]

A box making machine related to the embodiments of the present invention will now be detailed with reference to FIG. 1.

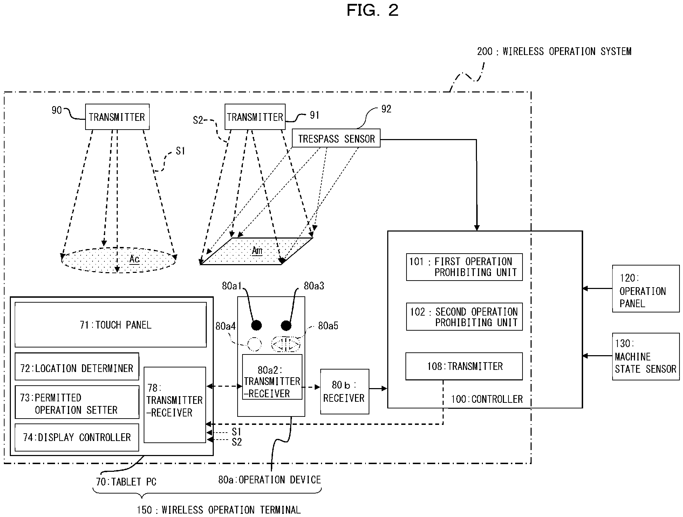

FIG. 1 illustrates machine structures of a box making machine related to the respective processes, attaching each process of processing a corrugated board sheet into a flat corrugated board box, that is, folded corrugated board box, above the machine structures in association with the machine structures. As illustrated in FIG. 1, the box making machine includes, in sequence from the upstream side, a feeding part 1, a printing part 2, a slotter creaser part 3, a die-cutting part 4, a folder-gluer part 5, and a counter-ejector part 6. In addition to above, the box making machine is provided with a wireless operation system 200 (see FIG. 2) that is to be detailed below.

Into the feeding part 1, a number of platelike corrugated board sheets 10a in a state of being piled are brought, and the corrugated board sheets 10a are provided to printing part 2 one at each time. The printing part 2 is formed of a predetermined number of colors, four colors in this example, of printing units 2a-2d. In the printing part 2, a corrugated board sheet 10a transferred one by one by a transfer conveyer 20 including, for example, a belt 21 and a driving roll 26 is printed in colors each by one of the printing units 2a-2d, each having an anilox roll 25, a plate cylinder 23, and a press cylinder 24.

The slotter creaser part 3 slots, and scores and creases the corrugated board sheet 10a printed in the printing part 2 and ejects the corrugated board sheet 10a.

In the die-cutting part 4, the corrugated board sheet 10a ejected from the slotter creaser part 3 are die-cut, and further slotted, scored, and creased.

Then, in the folder-gluer part 5, a flap on the one end in the width direction W of the corrugated board sheet 10a having been subjected to slotting, scoring is glued, and creasing, and the corrugated board sheet 10a is folded such that the left and right ends overlap at the bottom side. Consequently, the left and right ends of the folded corrugated board sheet 10a is glued with a gluer to be formed into a flat corrugated board box serving as a box-making sheet material 10.

The counter-ejector part 6 counts box-making sheet materials 10 processed in the folder-gluer part 5 and piles the materials 10 on a table, and when a predetermined number of box-making sheet materials 10 are piled, this sheet material block 10A is shipped as a one unit of a batch.

Furthermore, a sample checking area Ac (see FIG. 2) is provided in vicinity of the counter-ejector part 6. In a box making machine, before full-scale of manufacturing of box-making sheet material 10 is started, test paper feeding that feeds paper to the test is carried out to produce a prototype of the box-making sheet material 10, i.e., a sample 10. The sample 10 is drawn out from the counter-ejector part 6 and brought to the sample checking area Ac, and is subjected to quality check by, for example, checking whether the sample 10 matches the order in the sample checking area Ac.

If the sample 10 does not satisfy the quality, printing, slotting, and scoring and creasing positions, a die-cutting process, and a folding process are adjusted.

For example, a sample table may sometimes be provided in the sample checking area Ac, and the quality may be checked on the sample table.

### [1. First Embodiment]

### [1-1. Wireless Operation System]

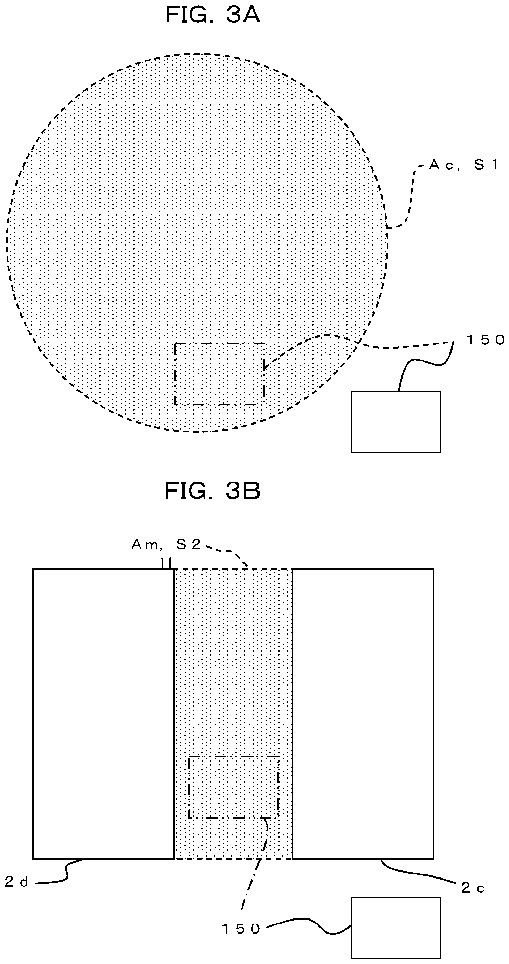

A wireless operation system 200 according to a first embodiment of the present invention will now be described with reference to FIGs. 2, 3A, and 3B.

As illustrated in FIG. 2, the wireless operation system 200 includes a first operation prohibiting unit 101, a second operation prohibiting unit 102, a transmitter 108, a wireless operation terminal 150, transmitters 90 and 91 provided around the box making machine, and a trespass sensor 92. The first operation prohibiting unit 101, the second operation prohibiting unit 102, and the transmitter 108 are provided in a controller 100 that controls the driving of the box making machine.

The first operation prohibiting unit 101 serves as first operation prohibiting means of the present invention, and the second operation prohibiting unit 102 serves as second operation prohibiting means of the present invention. The trespass sensor 92 serves as trespass detecting means of the present invention.

### [1-1-1. Transmitter and Trespass Sensor]

The transmitter 90 is provided over the sample checking area Ac, and, as shown by a dotted area, outputs a signal S1 that covers the entire sample checking area Ac and is also limited to the sample checking area Ac.

The transmitter 91 is provided over a maintenance area Am, and, as shown by a dotted area, outputs a signal S2 that covers the entire maintenance area Am and is also limited to the maintenance area Am.

The sample checking area Ac and the maintenance area Am each serves as an operation permitted area of the present invention, and the signals S1 and S2 each serves as an operation permitting signal of the present invention.

Here, as illustrated in FIG. 3A, the sample checking area Ac is a working space required for an operator to check a sample 10.

As illustrated in FIG. 3B, being focused on a maintenance area Am that is provided alongside to the printing unit 2d, the maintenance area Am is a working space required for an operator to carry out maintenance of the printing unit 2d around the printing unit 2d. Naturally, in addition to the printing unit 2d, the maintenance areas Am are provided at least one for each of the feeding part 1, the printing units 2a-2d, the slotter creaser part 3, the die-cutting part 4, the folder-gluer part 5, and counter-ejector part 6. The transmitters 91 are provided one at each of the maintenance areas Am, and output signals S2 having different specifications, for example, having different frequencies, to the respective parts.

As shown in FIG. 2, the trespass sensors 92 are provided one for each of the maintenance areas Am, and independently of each other detect trespass of an operator or the like on the corresponding maintenance area Am. Each trespass sensor 92 is connected to the controller 100 via a cable, and in the event of detecting trespass on the corresponding maintenance area Am, outputs the incident of the trespass to the controller 100.

### [1-1-2. Wireless Operation Terminal]

A wireless operation terminal 150 includes a tablet PC 70 and an operation device 80a wirelessly or wiredly connected to the tablet PC 70. In the present embodiment, the operation device 80a is wirelessly connected to the tablet PC 70.

The tablet PC 70 serves as inputting means of the present invention, and the operation device 80a serves as wireless transmitting means of the present invention.

The tablet PC 70 includes a touch panel 71, a position determiner 72, a permitted operation setter 73, a display controller 74, and a transmitter-receiver 78 having functions of both a transmitter and a receiver.

The touch panel 71 serves as an image displaying unit of the present invention; the position determiner 72 serves as position determining means of the present invention; the permitted operation setter 73 serves as permitted operation setting means of the present invention; the display controller 74 serves as instruction output restricting means and display controlling means of the present invention; and the transmitter-receiver 78 serves as a receiver of the present invention.

The touch panel 71 may adopt any type exemplified by a resistive type or a capacitance type.

The tablet PC 70 is communicable with the controller 100 and the operation device 80a via the transmitter-receiver 78.

With this configuration, the tablet PC 70 can obtain information about the box making machine, such as information about a production order and information about the state of the box making machine, from the controller 100. The obtained information is appropriately displayed on the touch panel 71 of the tablet PC 70.

The transmitter-receiver 78 is bidirectionally communicable with the transmitter-receiver 80a2 of the operation device 80a. In addition, the transmitter-receiver 80a2 is able to transmit data to a receiver 80b of the controller 100.

With this configuration, the tablet PC 70 does not directly output information to the controller 100, but does output information to the controller 100 via the transmitter-receiver 80a2 of the operation device 80a.

The transmitter-receiver 78 can not only communicate with the controller 100 and the operation device 80a, but also receive a signal S1 from the transmitter 90 of the sample checking area Ac and a signal S2 from the transmitter 91 of each maintenance area Am. When receiving a signal S1 or S2, the transmitter-receiver 78 outputs information indicative of receiving of the signal S1 or S2 and specification information (hereinafter called "received signal information") of the received signal to the position determiner 72.

In the present invention, the signals S1 and S2 from the transmitters 90 and 91 are received by the transmitter-receiver 78 of the tablet PC 70. Alternatively, a receiver that receives the signals S1 and S2 from the transmitters 90 and 91 may be externally attached to the tablet PC 70 separately from the transmitter-receiver 78.

When receiving information indicative of the receiving of the signal S1 or the signal S2 and the received signal information from the transmitter-receiver 78, the position determiner 72 determines that the tablet PC 70 is positioned in the sample checking area Ac or a maintenance area Am, and specifies the position of the tablet PC 70 from the received signal information.

Specifically, when the received signal information indicates the signal S1, the tablet PC 70 is determined to be positioned in the sample checking area Ac. In addition, the transmitters 91 provided to the respective maintenance areas Am of the feeding part 1, the printing units 2a-2d, the slotter creaser part 3, the die-cutting part 4, the folder-gluer part 5, and the counter-ejector part 6 transmit signals having different specifications as described above. Therefore, when the received signal information indicates a signal S2, the position determiner 72 determines that the tablet PC 70 is positioned in a maintenance area Am and, on the basis of the specification of the received signal, determines which maintenance area Am the tablet PC 70 is positioned. For example, if the received signal information indicates the signal S2 of maintenance area Am of the printing unit 2d, the position determiner 72 determines that tablet PC 70 is positioned in the maintenance area Am of the printing unit 2d.

The transmitter-receiver 78, the transmitters 90 and 91, and the position determiner 72 cooperatively detect the position of the wireless operation terminal 150 in the above manner. Accordingly, the position detecting means of the present invention is configured by the transmitter-receiver 78, the transmitters 90 and 91, and the position determiner 72.

If the wireless operation terminal 150 is detected to be positioned in the sample checking area Ac or a maintenance area Am, the permitted operation setter 73 sets at least one operation (hereinafter, "permitted operation") that is allowed to be executed by using the wireless operation terminal 150 among operations to be performed on the box making machine. If the wireless operation terminal 150 is detected to be positioned neither in the sample checking area Ac nor a maintenance area Am, no permitted operation is set. An operation not corresponding to a permitted operation is not operated via the wireless operation terminal 150.

Specifically, if the wireless operation terminal 150 is determined to be positioned in the sample checking area Ac, the permitted operation setter 73 sets an operation required for adjustment after the test paper feeding to a permitted operation. In the present embodiment, a permitted operation is set over all the parts of the box making machine, which are the feeding part 1, the printing units 2a-2d, the slotter creaser part 3, the die-cutting part 4, the folder-gluer part 5, and the counter-ejector part 6. If the wireless operation terminal 150 is determined to be positioned in a maintenance area Am, the permitted operation setter 73 sets an operation required for maintenance expected to be carried out in the same maintenance area Am to the permitted operation. Examples of a permitted operation will be described below.

The display controller 74 controls displaying on the touch panel 71 of the tablet PC 70 on the basis of the setting made by the permitted operation setter 73. Specifically, in regard of letter information or image information representing an operation, the display controller 74 displays such information of a permitted operation set by the permitted operation setter 73 on the touch panel 71, but does not display such information of an operation not corresponding to a permitted operation on the touch panel 71.

As to be detailed below, selecting a desired permitted operation from among one or more permitted operations displayed on the touch panel 71 and then outputting an operation instruction from the operation device 80a to the controller 100 makes it possible to execute the selected permitted operation. This means that a permitted operation displayed on the touch panel 71 can be executed by outputting an operation instruction to the controller 100 while an operation instruction for an operation not displayed on the touch panel 71 is substantially prohibited from being output. Accordingly, the display controller 74, which controls showing or hiding an operation on the touch panel 71 serves as instruction outputting restricting means of the present invention.

Here, description will now be made in relation to the operation of the touch panel 71. Selecting a desired permitted operation from a list of permitted operations displayed on the touch panel 71 by operating the touch panel 71 switches the display on the touch panel 71 to display the current amount of state related to the desired operation and also switch into a screen on which an amount of operation of the permitted operation can be input, so that an amount of operation can be input. After inputting an amount of operation, transmitting the amount of operation together with information representing the contents of the permitted operation by operating the operation device 80a causes the controller 100 to control working of one or more controlling elements corresponding to the permitted operation in accordance with the amount of operation.

Next, description will now be made in relation to the operation device 80a. In recent years, a highly-reliable wireless unit compatible with Safety Integrity Level (SIL) 3 in the functional safety standard IEC61508 has been practically used. The operation device 80a serves as a highly-reliable wireless unit in combination with a receiver 80b externally attached to the controller 100 to be detailed below.

The operation device 80a includes a push button 80a1 for selecting and determining a desired permitted operation, a transmitter-receiver 80a2, and an emergency stop button 80a3 for forcibly stopping the box making machine. Here, the emergency stop button 80a3 serves as emergency stopping means of the present invention.

The operation device 80a can obtain a selected permitted operation and a desired amount of the operation from the transmitter-receiver 78 of the tablet PC 70, using the transmitter-receiver 80a2, and can wirelessly transmit the obtained information from the transmitter-receiver 80a2 to the receiver 80b connected to the controller 100 by depressing the determination push button 80a1. Consequently, the permitted operation is executed at a desired amount of operation under control of the controller 100.

The emergency stop button 80a3 is a push button serving as physical inputting means. When the emergency stop button 80a3 is depressed, the controller 100 forcibly stops the box making machine irrespective of whether the wireless operation terminal 150 is positioned or not positioned in the sample checking area Ac and the maintenance areas Am.

In the above description, the amount of operation is input by operating the touch panel 71, but may alternatively be input by operating the operation device 80a. For example, as illustrated by two-dotted broken line in FIG. 2, a selection button 80a4 and operation amount controlling button 80a5 may be provided to the operation device 80a.

The selection button 80a4 is a button for selecting a desired permitted operation from a list of permitted operations displayed on the touch panel 71. When a desired permitted operation is selected via the selection button 80a4, the display on the touch panel 71 is switched into an input screen of the amount of operation.

The operation amount controlling button 80a5 is for setting an amount of operation related to the desired permitted operation. Since the amount of operation increased or decreased by the operation amount controlling button 80a5 is displayed on the input screen of the touch panel 71, the operator can increase or decrease the amount of operation with reference to the touch panel 71. With this configuration, the touch panel 71 merely displays an amount of operation and the set amount of operation is directly transmitted to the controller 100 from the operation device 80a. Accordingly, the amount of operation can be surely transmitted to the controller 100 by using the function of the operation device 80a serving as a highly-reliable wireless unit that is operation device 80a.

### [1-1-3. Controller]

The controller 100 includes a first operation prohibiting unit 101, a second operation prohibiting unit 102, a transmitter 108, and the receiver 80b. As described above, the receiver 80b serves as a highly-reliable wireless unit in combination with the operation device 80a, and is externally attached to the controller 100 via a wired connection.

Additionally, to the controller 100, an operation panel 120 that is able to output a control instruction for operation to the box making machine, multiple machine state sensors 130 that detect various machine states of the box making machine, and the trespass sensors 92 via cables. FIG. 2 collectively illustrates the multiple machine state sensors 130 in a lump for convenience.

The operation panel 120 serves as operating means of the present invention, and the machine state sensors 130 serve as machine state detecting means.

Hereinafter, the first operation prohibiting unit 101, the second operation prohibiting unit 102, the transmitter 108, and the receiver 80b will now be detailed described.

First of all, the first operation prohibiting unit 101 will now be described. According to some machine states detected by the machine state sensors 130, the first operation prohibiting unit 101 prohibits a permitted operation from being executed by using the wireless operation terminal 150. Specifically, the first operation prohibiting unit 101 determines, on the basis of results of detecting by the machine state sensors 130, whether execution of a permitted operation by using the wireless operation terminal 150 causes no risk. If the machine state sensors 130 detects a driving prohibited state, the first operation prohibiting unit 101 prohibits a permitted operation which has a possibility of causing a risk if being executed under the driving prohibited state detected by the 1300, from being executed by using the wireless operation terminal 150.

The manner of prohibiting a permitted operation may set the controller 100 not to accept an operation instruction from the wireless operation terminal 150 or set the first operation prohibiting unit 101 of the controller 100 to output an instruction to the permitted operation setter 73 or the display controller 74 of the tablet PC 70 not to display, on the tablet PC 70, a permitted operation that is determined to cause a risk.

Here, examples of "driving prohibited state" are a state where the cover of the box making machine is opened and a state where an emergency stop button on the side of the box making machine is being depressed.

Next, the second operation prohibiting unit 102 will now be described. In cases where trespass of an operator or the like on the maintenance area Am is detected by the trespass sensor 92, the second operation prohibiting unit 102 prohibits the operation panel 120 and the wireless operation terminal 150 from executing an operation to be made in the maintenance area Am on which trespass is detected.

For example, in cases where trespass of an operator or the like into the maintenance area Am of the printing unit 2a is detected, an operation at the printing unit 2a via the operation panel 120 and an operation at the printing unit 2a via the wireless operation terminal 150 at the sample checking area Ac are prohibited. A part provided alongside to a maintenance area Am on which trespass is detected is a trespass detected part of the present invention. In this example, the printing part 2a is a trespass detected part.

In contrast to the above, in cases where information indicating that the wireless operation terminal 150 is positioned in an maintenance area Am on which trespass is detected by the operator or the like is input from the position determiner 72 of the wireless operation terminal 150 via the operation device 80a, the second operation prohibiting unit 102 does not prohibit an operation via the wireless operation terminal 150 from being executed. For example, even if trespass of an operator into the maintenance area Am of the printing part 2a is detected, an operation of the wireless operation terminal 150 from the maintenance area Am is allowed to operate the printing part 2a.

The manner of prohibiting a permitted operation may set the controller 100 not to accept an operation instruction from the wireless operation terminal 150 or set the second operation prohibiting unit 102 of the controller 100 to output an instruction to the permitted operation setter 73 or the display controller 74 of the tablet PC 70 not to display a permitted operation on the tablet PC 70.

Prohibiting instructions from the first operation prohibiting unit 101 and the second operation prohibiting unit 102 are transmitted through the transmitter 108.

Next, the receiver 80b will now be described. As described above, the receiver 80b serves as a highly-reliable wireless unit in combination with operation device 80a. An operation instruction from the wireless operation terminal 150 is input into the controller 100 infallibly though the transmitter-receiver 80a2 of the operation device 80a and the receiver 80b.

### [1-2] Example of a Permitted Operation

Description will now be made in relation to examples of a permitted operation set when the wireless operation terminal 150 is determined to be positioned in the sample checking area Ac (i.e., when a test paper feeding is being carried out) or when the wireless operation terminal 150 is determined to be positioned in a maintenance area Am (i.e., when maintenance is being carried out). Here, non-illustrated mechanisms are provided to accomplish a permitted operation and the wireless operation terminal 150 accomplish the permitted operation by operating these mechanisms.

### [1-2-1] Example of a Permitted Operation

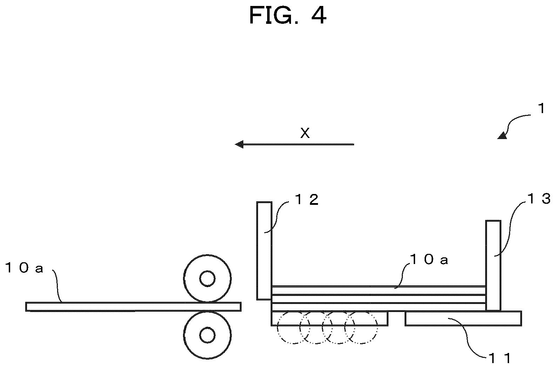

Description will now be made in relation to a heightening operation on the front stop of the feeding part 1 performed as an example of a permitted operation with reference to FIG. 4. The feeding part 1 includes a feeder table 11, a front stop 12, and a back stop 13.

Multiple corrugated board sheets 10a are piled on the feeder table 11 and the position of the corrugated board sheets 10a along a sheet transferring direction X is restricted by bringing the downstream ends and the upstream ends of the sheets 10a into contact with the front stop 12 and the back stop 13, respectively. In addition, the position of the corrugated board sheets 10a along a sheet width direction W is restricted by a pair of non-illustrated side guards arranged on the operating side and the driving side. The corrugated board sheets 10a are successively forwarded from the lowest corrugated board sheet 10a.

In the event of test paper feeding, the wireless operation terminal 150 according to one embodiment of the present invention adjusts the space in the height direction between the front stop 12 and the feeder table 11 so as to match the thickness of an individual corrugated board sheet 10a by executing a heightening operation on the front stop 12. In the event of maintenance, the wireless operation terminal 150 according to one embodiment of the present invention confirms whether a movement mechanism of the front stop 12 correctly works by making an attempt to move the front stop 12.

### [1-3. Actions and Effects]

Hereinafter, a wireless operation system 200 according to a first embodiment and a box making machine including the same wireless operation system 200 will now be described with reference to FIGs. 2, 3A, and 3B.

According to the first embodiment, the permitted operation setter 73 sets a permitted operation that is an operable operation by the permitted operation setter 73 on the basis of the position of the 150, inhibiting the wireless operation terminal 150 from being operated improperly.

Specifically, upon receipt of a signal S1 that the transmitter 90 transmits to the sample checking area Ac, the wireless operation terminal 150 sets one or more appropriate operations among the operations directed to all the part of the box making machine to permitted operations because the wireless operation terminal 150 is positioned in the sample checking area Ac.

The operator checks the quality of a sample 10 manufactured in the test paper feeding in the sample checking area Ac, and if the quality is not satisfied, perform an adjustment by executing a desired permitted operation so as to satisfy the quality via the wireless operation terminal 150 while confirming the related current machine state. In this circumstance, since the operator and the wireless operation terminal 150 are positioned in the sample checking area Ac, a permitted operation that the wireless operation terminal 150 is allowed to execute is limited to an operation for satisfying the production quality.

Similarly, when the operator carrying the wireless operation terminal 150 is positioned in the maintenance area Am of the printing part 2d, the wireless operation terminal 150 is detected to be positioned in the maintenance area Am of the printing part 2d and a permitted operation is limited to operations required for maintenance on the printing part 2d.

In contrast, when the wireless operation terminal 150 is not positioned in the sample checking area Ac or the maintenance areas Am, a permitted operation is not set and the operator is not allowed to operate the wireless operation terminal 150 unless the operator is positioned in the sample checking area Ac and any maintenance area Am.

This means that since an operation is not allowed to be made via the wireless operation terminal 150 at an unspecified area, it is possible to inhibit (1) an operation at an unusual place, (2) an operation at a place not suitable for the operation, e.g., an out-of-sight place, and (3) an unintentional operation while the wireless operation terminal 150 being carried by an operator on the move comes into contact with an ambient person or article, so that it is possible to inhibit an operation not highly related to the current position of the wireless operation terminal 150 from being executed.

Since an operation except for a permitted operation is not displayed on the touch panel 71 of the tablet PC 70 and is not operated, an operation not corresponding to a permitted operation is surely prevented from being inappropriately executed.

Here, the box making machine is formed of multiple parts, and an operation and an adjustment extending over the multiple parts are required to finish the corrugated board sheet 10 as ordered. In the present embodiment, in cases where the wireless operation terminal 150 is positioned in the sample checking area Ac, a permitted operation is set to extend over multiple area, which allows the operator to rapidly make an operation and an adjustment over multiple parts via the wireless operation terminal 150 at the sample checking area Ac, eliminating the requirement to reach each part.

For example, in cases where the wireless operation terminal 150 is positioned in the maintenance area Am of the printing part 2d, the operation target part of the operation by the wireless operation terminal 150 is only the printing part 2d, and accordingly, the wireless operation terminal 150 is restricted to making an operation and an adjustment directed only to the printing part 2d. Consequently, in cases where an operator carrying the wireless operation terminal 150 is in the maintenance area Am of the printing part 2d, for example, the operator is not allowed to operate the printing part 2c via the wireless operation terminal 150 even if another operator is in the maintenance area Am of the printing part 2c, so that safety of the other operator positioned around the maintenance area Am of the printing part 2c can be ensured.

Furthermore, in cases where the wireless operation terminal 150 is positioned in the maintenance area Am of the printing part 2d, the operation target part of the operation by the wireless operation terminal 150 is the printing part 2d. Accordingly, the operator can appropriately carry out maintenance of the printing part 2d with the wireless operation terminal 150, closely monitoring the state of the printing part 2d.

In cases where the machine state sensor 130 detects a driving prohibiting state of the box making machine and the first operation prohibiting unit 101 determines that even a permitted operation, when being executed, causes a risk, the wireless operation terminal 150 is prohibited from executing this permitted operation.

In particular, in cases where the machine state sensor 130 detects a state having a difficulty in being visually checked from the sample checking area Ac and the maintenance areas Am, it is possible to enhance the safety of an operation executed via the wireless operation terminal 150.

For example, in cases where the trespass sensor 92 detects trespass on the maintenance area Am of the printing part 2a, operations on the printing unit 2a via the wireless operation terminal 150 and the operation panel 120 are prohibited, but a permitted operation from the maintenance area Am of the printing part 2a is allowed to be executed via the wireless operation terminal 150.

Accordingly, when an operator not carrying the wireless operation terminal 150 is solely positioned in the maintenance area Am of the printing part 2a, any operation directed to the printing part 2a is allowed to be externally made. In contrast, in cases where an operator carrying the wireless operation terminal 150 is positioned in the maintenance area Am of the printing part 2a solely or together with another operator, the wireless operation terminal 150 is allowed to execute an operation required for maintenance of the printing part 2a. This make is possible to execute a required operation, ensuring the safety.

In regard of an emergency stop operation, the box making machine can be rapidly and forcibly stopped by depressing the emergency stop button 80a3 irrespective whether or not the wireless operation terminal 150 is in the sample checking area Ac or the maintenance areas Am, so that safety can be ensured in cases where a problem arises in the box making machine.

Here, the emergency stop button 80a3 is a physical inputting device and therefore is not turned on when an article or a hand gently touches the emergency stop button 80a3, which can prevent the emergency stop button 80a3 from being unintentionally turned on to make the box making machine emergency-stop.

Furthermore, since the wireless operation terminal 150 is formed of two separated units of the tablet PC 70 serving as inputting means and the operation device 80a serving as wireless transmitting means, a highly-reliable wireless unit as compared with the tablet PC 70 can be adapted to the operation device 80a, so that the reliability of the wireless operation system 200 can be enhanced.

By using a function included in the tablet PC 70, the screen that displays a permitted operation and a screen to input an operation amount of a permitted operation can be appropriately changed.

### [1-4. Modification]

(1) The above first embodiment uses the tablet PC 70, which may alternatively be substituted with a smartphone, a laptop PC, or a dedicated portable terminal provided with an image display unit like a touch panel.
(2) The above first embodiment is configured not to display an operation except for a permitted operation on the touch panel 71. This means that the instruction output restricting means of the present invention is configured by display controlling means that sets displaying on the image displaying unit. However, the instruction output restricting means should by no means be limited to the display controlling means.

Alternatively, the touch panel 71 may display an operation except for the permitted operation in addition to the permitted operation thereon, but the operation except for the permitted operation may be unselectable even if being touched.

In this alternative, the operation except for a permitted operation is preferably displayed in a different manner from the permitted operation, which is exemplified by being displayed at a lower brightness than that of the permitted operation.

### [2. Second Embodiment]

The box making machine according to the second embodiment is different in configuration of the wireless operation system from that of the first embodiment. A wireless operation system 200A of the present embodiment will now be described with reference to FIG. 5. Like reference numbers between the first and second embodiments designate the similar elements and parts, so repetitious description is omitted here.

### [2-1. Configuration]

In the wireless operation system 200A of the present embodiment, a wireless operation terminal 70A is an independent tablet PC and the controller 100A, which controls the working of the box making machine, directly wirelessly communicates with the wireless operation terminal 70A. Specifically, the controller 100 of the first embodiment includes the receiver 80b externally attached thereto and the transmitter 108 incorporated therein. The controller 100A of the present embodiment includes the transmitter-receiver 108A that can directly transmit and receive data to and from the wireless operation terminal 70A and that is incorporated in the controller 100A in place of the receiver 80b and the transmitter 108.

Like the first embodiment, the touch panel 71 of a tablet PC serving as the wireless operation terminal 70A is configured to be able to display a list of permitted operations and the current amount of a state related to each permitted operation, and also to allow an operation amount of each permitted operation to be input. In the present embodiment, the determination push button 80a1 and the emergency stop button 80a3, which are provided to the operation device 80a in the first embodiment, are displayed as a decision key 71a and an emergency stop key 71b on the touch panel 71. This means that the inputting means and the emergency stop means of the present invention are configured by the decision key 71a and the emergency stop key 71b being soft keys displayed on the touch panel 71, respectively. The decision key 71a and the emergency stop key 71b are always displayed on the touch panel 71 even if the displaying on the touch panel 71 is switched.

Time periods of touch to determine that the decision key 71a and the emergency stop key 71b are turned on are preferably set to be long in a range not impairing the operability so that the keys are turned on by unintentional touch of a finger. The manner of operating the touch panel 71 is the same as the first embodiment except for the decision key 71a serving as the inputting means of the present invention, so the description thereof is omitted here.

The remaining configuration is the same as the first embodiment, so repetitious description is omitted here.

### [2-2. Actions and Effects]

The second embodiment of the present invention obtains the same effects as the first embodiment, and the wireless operation terminal 70A configured by a tablet PC bring the following advantage. Since the wireless operation terminal 70A is formed only of a tablet PC that integrates therein the inputting means and wireless transmitting means, the operator sufficiently carries the tablet PC when wirelessly operates the box making machine. This allows the operator positioned at a small maintenance area Am, to easily operate the box making machine via a single wireless operation terminal 70A with reference to the state displayed of the box making machine.

Furthermore, the tablet PC includes the touch panel 71 serving as both the inputting means and the image displaying unit, and therefore has enhanced portability and operability as compared with a wireless transmission terminal (e.g., a laptop computer) having the inputting means and the image displaying unit being separated from each other.

By using the function included in the tablet PC, the screen to input an instruction directed to the controller 100A can be appropriately changed.

### [2-3. Modification]

Alternatively, the second embodiment may further adopt the following configuration in addition to that described in the section [1-4. Modification] of the first embodiment.
(1) In the second embodiment, the decision key 71a and the emergency stop key 71b are soft keys displayed on the touch panel 71, but may alternatively be physical inputting devices such as depression keys provided to the wireless operation terminal.

### [3. Third Embodiment]

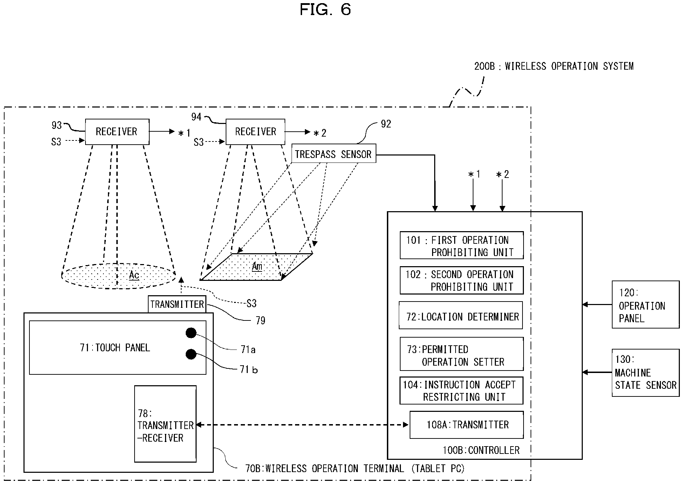

The box making machine according to the third embodiment is different in configuration of the wireless operation system from the second embodiment. A wireless operation system 200B of the present embodiment will now be described with reference to FIG. 6. Like reference numbers between the second and third embodiments designate the similar elements and parts, so repetitious description is omitted here.

### [3-1. Configuration]

A wireless operation system 200B of the present embodiment is different mainly in configuration of the position determining means from the second embodiment, which accompanies a difference in configuration of the wireless operation terminal and the controller from the second embodiment.

Specifically, a transmitter 79 is externally attached to a wireless operation terminal 70B configured by a tablet PC, and receivers 93 and 94 are installed in vicinity to the box making machine. The receiver 93 is arranged close to and over the sample checking area Ac, and, when the wireless operation terminal 70B is positioned inside the sample checking area Ac, can receive a signal S3 from the transmitter 79, but when the wireless operation terminal 70B is out of the sample checking area Ac, does not receive the signal S3 from the transmitter 79. Similarly, the receiver 94 is arranged close to and over each maintenance area Am, and, when the wireless operation terminal 70B is positioned inside the maintenance area Am, can receive a signal S3 from the transmitter 79, but when the wireless operation terminal 70B is out of the maintenance area Am, does not receive the signal S3 from the transmitter 79.

Upon receipt of the signal S3 from the transmitter 79 of the wireless operation terminal 70B, the receivers 93 and 94 transmit the fact of the reception of the signal and identification information of the receivers to the controller 100B that controls the working of the box making machine.

The signal S3 serves as an operation permitting signal of the present invention.

In the present embodiment, differently from the controller 100A of the above second embodiment, the position determiner 72 and the permitted operation setter 73 are included in the controller 100B, not in the wireless operation terminal 70B, and an instruction accept restricting unit 104 is included in the controller 100B. The instruction accept restricting unit 104 serves as instruction accept restricting means of the present invention.

The wireless operation terminal 70B is not provided with the display controller 74 for the following reason. This means that, as compared with the controller 100A of the second embodiment, the wireless operation terminal 70B omits the position determiner 72, the permitted operation setter 73, and the display controller 74.

In cases where the position determiner 72 of the controller 100B receives the fact of the receiving of the signal S3 and identification information of the receiver 93 from the receiver 93, the permitted operation setter 73 determines that the wireless operation terminal 70B is positioned in the sample checking area Ac near the receiver 93 that has received the signal S3. Likewise, in cases where the position determiner 72 receives the fact of the reception of the signal S3 and identification information of the receiver 94 from the receiver 94, the permitted operation setter 73 determines that the wireless operation terminal 70B is positioned in a maintenance area Am near the receiver 94 that has received the signal S3.

This means that the transmitter 79, the receivers 93 and 94, and the position determiner 72 cooperatively detect the position of the wireless operation terminal 70B, and the position detecting means of the present invention is configured by the transmitter 79, the receivers 93 and 94, and the position determiner 72.

In cases where the wireless operation terminal 70B is detected to be positioned in the sample checking area Ac or a maintenance area Am, the permitted operation setter 73 sets at least one permitted operation.

Upon receipt of an operation instruction from the wireless operation terminal 70B, the instruction accept restricting unit 104 accepts the instruction if the instruction is directed to a permitted operation, but does not accept the instruction if the instruction is directed to an operation except for a permitted operation.

In the present embodiment, since providing the instruction accept restricting unit 104 to the controller 100B causes the controller 100B not to accept an operation instruction directed to an operation except for a permitted operation, the wireless operation terminal 70B omits the display controller 74.

The remaining configuration is the same as that of the second embodiment, so repetitious description is omitted here.

### [3-2. Actions and Effects]

According to the third embodiment, the transmitter 79, the receivers 93 and 94, and the position determiner 72 cooperatively detect that the wireless operation terminal 70B is positioned in the sample checking area Ac or a maintenance area Am; and in cases where the wireless operation terminal 70B is detected to be in the sample checking area Ac or a maintenance area Maintenance area Am, the permitted operation setter 73 sets at least one permitted operation. In the event of receiving an operation instruction from the wireless operation terminal 70B, if the received instruction is directed to a permitted operation, the instruction accept restricting unit 104 accepts the instruction, but if the received instruction is directed to an operation except for the permitted operation, does not accept the instruction.

Consequently, the third embodiment can obtain the same effects as the first and second embodiments.

### [3-3. Modification]

The third embodiment also adopts the configuration described in the columns of [1-4. Modification] and [2-3. Modification].

### [4. Miscellaneous]

(1) The position detecting means (i.e., means that detects the position of the wireless operation terminal) is not limited to those of the respective embodiments.

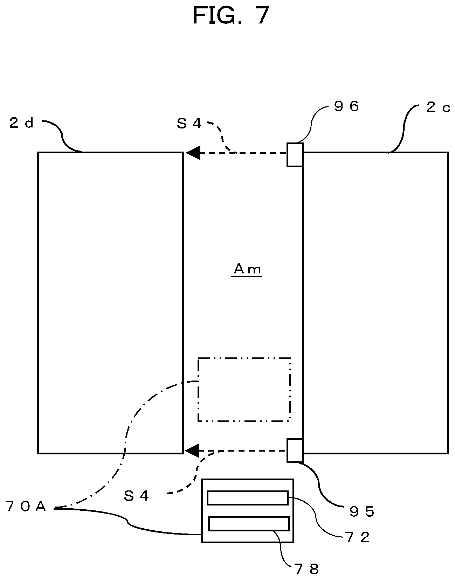

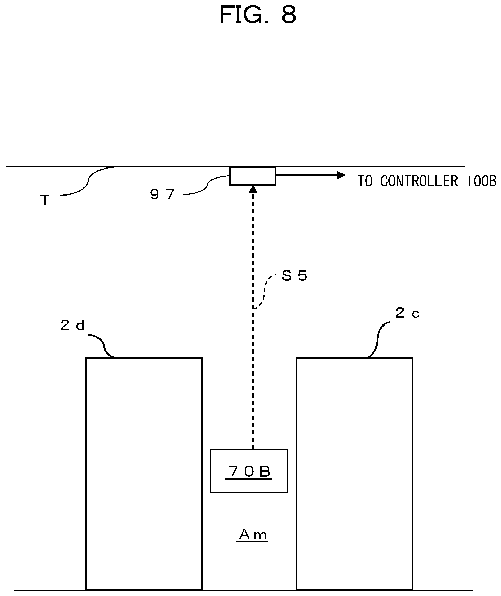

Hereinafter, modifications of the position detecting means will now be detailed by referring to FIGs. 7 and 8.

The configuration shown in FIG. 7 has position detecting means having a configuration changed from the configuration of the second embodiment shown in FIG. 5. The configuration shown in FIG. 7 determines whether or not the wireless operation terminal 70A is positioned in the operation permitted area (in this example, the maintenance area Am between the printing parts 2c and 2d) by detecting trespass and exit of the wireless operation terminal 70A on and from the operation permitted area.

Specifically, transmitters 95 and 96 are disposed one at each of the entrances of a maintenance area Am, and the position determiner 72 alternately determines that the wireless operation terminal 70A is present at or absent from the maintenance area Am each time the transmitter-receiver 78 receives a passing signal issued from transmitters 95 and 96. In other words, when the wireless operation terminal 70A is moved from the position shown by a solid line to the position shown by a two-dotted broken line through the entrance, the wireless operation terminal 70A receives a passing signal S4 from the transmitter 95 and determines that the wireless operation terminal 70A is positioned in the maintenance area Am. In contrast, when wireless operation terminal 70A passes an entrance at which the transmitter 95 or the transmitter 96 is disposed, the wireless operation terminal 70A receives a passing signal S4 from the transmitter 95 or the transmitter 96 and determines that the wireless operation terminal 70A is moved to the outside of the maintenance area Am.

This means that the position detecting means of the present invention is configured by the transmitters 95 and 96, the transmitter-receiver 78, and the position determiner 72.

The wireless operation terminal 70A shown in FIG. 7 is the same as the wireless operation terminal 70A of the second embodiment of FIG. 5, but only the position determiner 72 and the transmitter-receiver 78 appear in the drawing for convenience. On the contrary to FIG. 7, a transmitter may be attached to the wireless operation terminal 70A and receivers may be installed at the entrances of the maintenance area Am, and a determination may be made as to whether the wireless operation terminal 70A trespasses on or exits from the maintenance area Am or is positioned in the maintenance area Am.

The configuration shown in FIG. 8 has position detecting means having a configuration changed from that of the third embodiment shown in FIG. 6. The configuration shown in FIG. 8 determines whether or not the wireless operation terminal 70B is positioned in the operation permitted area (in this example, the maintenance area Am between the printing parts 2c and 2d) by using an operation device detecting sensor 97.

Specifically, the operation device detecting sensor 97 is installed to the ceiling T of the premises in which the box making machine is placed, and the operation device detecting sensor 97 obtains a position information signal S5 output from the wireless operation terminal 70B and the position information is transmitted to the position determiner 72 (see FIG. 6) of the controller 100B. The position determiner 72 determines, on the basis of the position information obtained from the operation device detecting sensor 97, whether the wireless operation terminal 70B is positioned in the sample checking area Ac or a maintenance area Am.

This means that the position detecting means of the present invention is configured by terminal position specifying means terminal being formed of the operation device detecting sensor 97 and a position information transmitting function of the wireless operation terminal 70B, and the position determiner 72 of the controller 100B.

In the above embodiments (and the modifications thereof), examples in which the wireless operation system of the present invention is applied to a box making machine are described. The present invention should by no means be limited to application to a box making machine, and can be applied to various devices exemplified by a rotary press and a corrugated board sheet manufacturing machine.

In application of the wireless operation system of the present invention to a rotary press, when the wireless operation terminal is positioned in a maintenance area of a printing unit constitute the rotary press, it is conceivable that operations to change the phase of rotation of a printing cylinder and the position of the axis direction of a printing cylinder are set to be permitted operations, for example. This allows an operator to adjust the phase of rotation of the printing cylinder and the position of the axis direction of the printing cylinder by optimizing the printing position through visual checking and operating the wireless operation terminal from the maintenance area of the printing unit.

In application of the wireless operation system of the present invention to a corrugated board sheet manufacturing machine, when the wireless operation terminal is positioned in a maintenance area of a single facer that pastes the bottom liner to a corrugated medium, it is conceivable that an operation directed to the gap amount between the glue roll and the meter roll is set to be an permitted operation, for example. This allows an operator to optimize an amount of glue to paste the bottom liner and the corrugated medium by adjusting the gap amount between the glue roll and the meter roll through visual checking and operating the wireless operation terminal from the maintenance area of the single facer.

In the above embodiments, description is made in relation to the feeding part as an example of application of the wireless operation system of the present invention to a box making machine, but the present invention should by no means be limited this. The present invention can be applied to all the adjustments and maintenance related to the quality of the box-making sheet material in the printing part, the slotter creaser part, the die-cutting part, the folder-gluer part, and the counter-ejector part. In addition, the present invention may be applied to an adjustment and an operation on facilities upstream or downstream of the box-forming machine, which however do not appear in the drawings.

### [Description of Reference signs]

1 feeding part (part)
2 printing part (part)
2a-2d printing unit (part)
3 slotter creaser part (part)
4 die-cutting part (part)
5 folder-gluer part (part)
6 counter-ejector part (part)
10 flat corrugated board sheet (sheet material for box making, sample)
10a corrugated board sheet
10A sheet material block
70 tablet PC (inputting means)
70A, 70B tablet PC (wireless operation terminal, inputting means)
71 touch panel (image displaying unit)
71a decision key
71b emergency stop key (emergency stopping means)
72 position determiner (position determining means, position detecting means)
73 permitted operation setter (permitted operation setting means)
74 display controller (instruction output restricting means, display controlling means)
78 transmitter-receiver (position detecting means)
79 transmitter
80a operation device (wireless transmitting means)
80a1 determination push button
80a2 transmitter-receiver
80a3 emergency stop button (emergency stopping means)
80a4 selection button
80a5 operation amount controlling button
90,91,95,96 transmitter (position detecting means)
92 trespass sensor (trespass detection means)
93,94 receiver
97 operation device detecting sensor
100,100A,100B controller
101 first operation prohibiting unit (first operation prohibiting means)
102 second operation prohibiting unit (second operation prohibiting means)
104 instruction accept restricting unit (instruction accept restricting means)
108 transmitter
108A transmitter-receiver
120 operation panel
130 machine state sensor (machine state detecting means)
150 wireless operation terminal
200,200A,200B wireless operation system
Ac sample checking area (operation permitted area)
Am maintenance area (operation permitted area)
S1,S2,S3 operation permitting signal operation permitting signal
S4 passing signal
S5 position information signal

## Claims

1. A wireless operation system comprising:
a wireless operation terminal comprising inputting means that inputs an operation instruction to cause a machine to execute a predetermined operation and wireless transmitting means that wirelessly transmits the operation instruction input from the inputting means;
position detecting means that detects a position of the wireless operation terminal; and
permitted operation setting means that sets a permitted operation that the wireless operation terminal is allowed to execute in accordance with the position of the wireless operation terminal detected by the position detecting means.

2. The wireless operation system according to claim 1, wherein:
the position detecting means detects that the wireless operation terminal is positioned in a predetermined operation permitted area; and
the permitted operation setting means sets, if the position detecting means detects that the wireless operation terminal is positioned in the predetermined operation permitted area, at least one of a plurality of the permitted operations.

3. The wireless operation system according to claim 2, wherein the position detecting means comprises:
a transmitter that transmits an operation permitting signal to the operation permitted area serving as an outputting range;
a receiver that is attached to the wireless operation terminal and is able to receive the operation permitting signal; and
position determining means that determines, if the receiver receives the operation permitting signal, that the wireless operation terminal is positioned in the operation permitted area.

4. The wireless operation system according to claim 2, wherein the position detecting means comprises:
a transmitter that is attached to the wireless operation terminal and that outputs an operation permitting signal;
a receiver that is able to receive the operation permitting signal in the operation permitting area serving as a receiving range; and
position determining means that determines, if the receiver receives the operation permitting signal, that the wireless operation terminal is positioned in the operation permitted area.

5. The wireless operation system according to claim 2, wherein the position detecting means comprising:
a transmitter that is attached to one of an entrance of the operation permitted area or the wireless operation terminal and that outputs a passing signal;
a receiver that is attached to a remaining one of the entrance of the operation permitted area and the wireless operation terminal and that is able to receive the passing signal; and
position determining means that determines, on the basis of the receiving of wireless operation terminal, whether or not the wireless operation terminal is positioned in the operation permitted area.

6. The wireless operation system according to claim 2, wherein the position detecting means comprising:
terminal position specifying means that specifies a position of the wireless operation terminal; and
position determining means that determines whether or not the wireless operation terminal is positioned in the operation permitted area.

7. The wireless operation system according to one of claims 1-6, further comprising instruction outputting restricting means that allows the wireless operation terminal to output an instruction to execute the permitted operation and prohibits the wireless operation terminal from outputting an instruction to execute an operation except for the permitted operation.

8. The wireless operation system according to claim 7, wherein:
the wireless operation terminal comprises an image display unit that displays an operation that is able to cause the machine to execute;
the inputting means is configured to be able to select an operation that the wireless operation terminal is caused to execute from an operation displayed on the image display unit;
the instruction outputting restricting means is configured to be display controlling means that sets display on the image display unit; and
the display controlling means displays an image representing the permitted operation on the image display unit and prohibits the image display unit from displaying an image representing an operation except for the permitted operation.

9. The wireless operation system according to one of claims 1-6, further comprising instruction accept restricting means provided on the machine side that accepts an instruction to execute the permitted operation and does not accept an instruction to execute an operation except for the permitted operation.

10. The wireless operation system according to one of claims 2-6 or one of claims 7-9 depending on claim 2, wherein:
the machine is a manufacturing machine including a plurality of parts and is provided alongside with a sample checking area to check quality of a sample manufactured by the manufacturing machine;
the operation permitted area includes at least the sample checking area;
the position detecting means determines whether or not the wireless operation terminal is positioned in the sample checking area; and
the permitted operation setting means sets, if the wireless operation terminal is determined to be positioned in the sample checking area, the permitted operation over the plurality of parts.

11. The wireless operation system according to one of claims 2-6 or one of claims 7-10 depending on claim 2, wherein:
the machine includes a plurality of parts;
the operation permitted area includes at least a plurality of maintenance areas provided one alongside to each of the plurality of parts;
the position detecting means determines whether or not the wireless operation terminal is positioned in the plurality of maintenance areas; and
the permitted operation setting means sets, if the wireless operation terminal is positioned in one of the plurality of the maintenance areas, an operation required for maintenance in the one maintenance area in which the wireless operation terminal is determined to be positioned to be the permitted operation.

12. The wireless operation system according to one of claims 1-11, wherein:
the machine is provided with machine state detecting means that detects a machine state; and
the wireless operation system further comprises first operation prohibiting means that prohibits, if execution of the permitted operation under the machine state detected by the machine state detecting means is detected to have a possibility of causing a risk, the permitted operation from being executed.

13. The wireless operation system according to claim 11 or claim 12 depending on claim 11, wherein:
the machine is further provided with operation means that is able to transmit the operation instruction to the machine separately from the wireless operation terminal;
the wireless operation terminal further comprises
trespass detecting means that detect trespass on the maintenance area;
second operation prohibiting means; and the second operation prohibiting means
prohibits, if trespass is detected by the trespass detecting means, the operating means and the wireless operation terminal from executing an operation directed to a trespass detected part that is one of the plurality of parts and that is provided alongside with one of the maintenance area into which the trespass is detected, and
does not prohibit, if trespass is detected by the trespass detecting means under a state where the wireless operation terminal is detected to be positioned in the maintenance area provided alongside to the trespass detected part, the wireless operation from executing the permitted operation.

14. The wireless operation system according to one of claims 1-13, wherein:
the wireless operation terminal includes emergency stopping means that performs emergency stopping on the machine; and
when the emergency stopping means is operated, the emergency stopping is performed irrespective of the position of the wireless operation terminal.

15. The wireless operation system according to claim 14, wherein the emergency stopping means is configured by a physical inputting device.

16. The wireless operation system according to one of claims 1-15, wherein the wireless operation terminal includes the inputting means and the wireless transmitting means separately from each other.

17. The wireless operation system according to one of claims 1-15, wherein:
the wireless operation terminal includes the inputting means and the wireless transmitting means integrated with each other; and
the inputting means is a touch panel serving also as an image display unit.

18. A box making machine comprising a wireless operation system defined in one of claims 1-17.
